# EUROPEAN PATENT APPLICATION

(11) **EP 4 821 984 A1**
(43) Date of publication of application: **14.10.2026**
(21) Application number: 25886247.3
(22) Date of filing: 14.10.2025
(51) Int. Cl.: C08L 67/02, C08L 67/04, C08L 3/02, C08L 51/04, C08L 51/06, C08J 5/18

(54) **RESIN COMPOSITION AND BIODEGRADABLE RESIN MOLDED PRODUCT COMPRISING SAME**

(30) Priority: 28.10.2024 KR 20240148909
(71) Applicant: LG Chem, Ltd., Seoul 07336 (KR)
(72) Inventor: JUNG, Dongwook, Daejeon 34122 (KR); JEONG, Byeong Joon, Daejeon 34122 (KR); SEO, Youngrok, Daejeon 34122 (KR)
(74) Representative: Goddar, Heinz J.
(86) International application number: PCT/KR2025/016087
(87) International publication number: WO 2026/095422

(57) **Abstract**

The present invention relates to a resin composition and a biodegradable resin molded article comprising the same. The resin composition of the present invention may realize excellent mechanical properties while maintaining the biodegradability of polybutylene adipate terephthalate.

## Description

### [Technical Field]

### Cross-reference to Related Application(s)

This application claims the benefit of priority based on Korean Patent Application No. 10-2024-0148909 filed on October 28, 2024, the entire contents of which are incorporated herein by reference.

The present invention relates to a resin composition and a biodegradable resin molded article comprising the same.

### [Background Art]

Recently, as interest in environmental protection and environmental friendliness has surged, the necessity for methods of cultivating eco-friendly agricultural products has been increasing. The mulching method is known as one such eco-friendly farming method, and is a method of covering the surface of soil with a mulching film or the like when cultivating crops to prevent the growth of weeds, prevent diseases and pests, maintain soil moisture or control soil temperature, prevent soil erosion by rainwater during rain, and reduce the use of pesticides.

While the mulching film used in such a mulching method significantly contributes to the productivity of agricultural products, there are difficulties in the collection and recycling thereof after use. Generally, synthetic resins such as polypropylene and polyethylene are used and biodegradability is imparted by adding biodegradable components as additives, but biodegradation of the synthetic resins themselves is practically impossible. In addition, synthetic resins remaining without being biodegraded pose a problem of soil pollution.

In addition to the mulching film for crop cultivation as described above, environmental problems such as microplastics from existing synthetic resins, human safety issues such as endocrine disruptors, and problems such as the depletion of natural resources used as raw materials for plastics have emerged, and thus various studies are being conducted to replace synthetic resins with biodegradable resins. Representatively, the application of biodegradable resins is required in various fields, including food packaging, drinking water containers, food containers, and automotive molded parts.

Accordingly, attempts have been made to manufacture a mulching film using polybutylene adipate terephthalate (PBAT), which is a biodegradable plastic, but while polybutylene adipate terephthalate (PBAT) has high elongation, there is a problem that mechanical properties such as Young's modulus are lower than those of conventional films such as polyethylene. In addition, since polybutylene adipate terephthalate (PBAT) is a 100% petroleum-based material, its bio-based material content is low.

Accordingly, attempts have been made to improve physical properties and increase bio-based raw material content by compounding polybutylene adipate terephthalate (PBAT) with various biodegradable materials, but there is a problem in that mechanical properties are poor due to low compatibility between the polybutylene adipate terephthalate and the other biodegradable materials.

### [Detailed Description of the Invention]

### [Technical Problem]

The present invention aims to provide a resin composition that exhibits high biodegradability and has mechanical properties improved through the enhancement of compatibility between biodegradable resins.

In addition, the present invention provides a resin molded article comprising the resin composition.

### [Technical Solution]

In order to solve the above problems, the present invention provides a resin composition comprising polybutylene adipate terephthalate (PBAT); polylactic acid (PLA); thermoplastic starch (TPS); and a compatibilizer, wherein the compatibilizer comprises a maleic anhydride-grafted polyolefin elastomer.

According to an embodiment, the polylactic acid may be included in an amount of 0.1 to 20 parts by weight based on 100 parts by weight of the total of the polybutylene adipate terephthalate, the polylactic acid, and the thermoplastic starch.

According to an embodiment, thermoplastic starch may be included in an amount of 20 to 50 parts by weight based on 100 parts by weight of the total of the polybutylene adipate terephthalate, the polylactic acid, and the thermoplastic starch.

According to an embodiment, the polyolefin elastomer may comprise at least one selected from the group consisting of polypropylene elastomer, polyethylene elastomer, polyethylenepropylene elastomer, ethylene-propylene-diene monomer elastomer, polyethylene-1-pentene elastomer, polyethylene-1-hexene elastomer, polyethylene-1-heptene elastomer, and polyethylene-1-octene elastomer.

According to an embodiment, the grafting rate of the maleic anhydride-grafted polyolefin elastomer may be 0.1 wt% to 2.0 wt%.

According to an embodiment, a maleic anhydride-grafted polyolefin elastomer may be included in an amount of 0.01 to 2.0 parts by weight based on a total of 100 parts by weight of the total of the polybutylene adipate terephthalate, the polylactic acid, and the thermoplastic starch.

According to an embodiment, the resin composition of the present invention may consist of 40 to 79 parts by weight of polybutylene adipate terephthalate, 0.1 to 20 parts by weight of polylactic acid, 20 to 50 parts by weight of thermoplastic starch, 0.01 to 2.0 parts by weight of a maleic anhydride-grafted polyolefin elastomer, and 0.1 to 0.5 parts by weight of a slip agent, based on 100 parts by weight of the total of the polybutylene adipate terephthalate, the polylactic acid, and the thermoplastic starch.

According to an embodiment, the compatibilizer may further comprise polybutylene adipate terephthalate with maleic acid ester-bonded to the terminal hydroxyl group.

According to an embodiment, the viscosity of the polybutylene adipate terephthalate with maleic acid ester-bonded to the terminal hydroxyl group may be 500 Pa·s to 5,000 Pa·s.

According to an embodiment, the polybutylene adipate terephthalate with maleic acid ester-bonded to the terminal hydroxyl group may include 1.0 wt% to 10.0 wt% of maleic acid.

According to an embodiment, the weight average molecular weight of the polybutylene adipate terephthalate with maleic acid ester-bonded to the terminal hydroxyl group may be from 100,000 g/mol to 150,000 g/mol.

According to an embodiment, the polybutylene adipate terephthalate with maleic acid ester-bonded to the terminal hydroxyl group may be included in an amount of 0.1 to 10 wt% based on the total weight of the polybutylene adipate terephthalate, the polylactic acid, the thermoplastic starch, and the polybutylene adipate terephthalate with maleic acid ester-bonded to the terminal hydroxyl group.

In addition, the present invention provides a resin molded article comprising the resin composition of the present invention.

According to an embodiment, the resin molded article may have a tensile strength value of 200 kgf/cm² to 500 kgf/cm² measured according to the ISO 527 standard.

According to an embodiment, the resin molded article may have an elongation value of 350% to 1000% measured according to the ISO 527 standard.

According to an embodiment, the resin molded article may have a Dart impact of 400 g or more and 2.5 J or more measured according to the ASTM D1709 standard.

According to an embodiment, the resin molded article may have puncture resistance values of 15.0 N or more, 70.0% or more, and 0.70 J or more, as measured according to the ASTM D5748 standard.

According to an embodiment, the resin molded article may be a biodegradable mulching film or a food packaging film.

The terms used in the present specification are used only to describe exemplary embodiments and are not intended to limit the present invention.

Singular expressions include plural expressions unless the context clearly indicates otherwise.

In the present specification, terms such as "comprise," "include," or "have" are intended to describe embodied features, numbers, steps, components, or combinations thereof, and do not preclude the presence or addition of one or more other features, numbers, steps, components, or combinations thereof.

Since the present invention may be modified in various ways and may have various forms, specific embodiments will be illustrated and described in detail below. However, this is not intended to limit the present invention to a specific disclosed form, and it should be understood to include all modifications, equivalents, and substitutes included in the spirit and technical scope of the present invention.

Hereinafter, the present invention will be described in detail.

The present invention provides a resin composition comprising polybutylene adipate terephthalate (PBAT); polylactic acid (PLA); thermoplastic starch (TPS); and a compatibilizer, wherein the compatibilizer comprises a maleic anhydride-grafted polyolefin elastomer.

PBAT is a biodegradable polymer and exhibits high elongation at break and ductility characteristics. However, since mechanical properties thereof, such as tensile strength and elastic modulus, are low, the application thereof may be limited. In order to overcome these limitations, the application range may be expanded and the properties thereof may be improved by using PBAT in combination with other biodegradable polymers.

Typical biodegradable polymers blendable with PBAT include polylactic acid, thermoplastic starch, and the like. However, when a resin composition is prepared by compounding polybutylene adipate terephthalate (PBAT), which is a type of biodegradable resin, with polylactic acid and thermoplastic starch, polybutylene adipate terephthalate shows hydrophobic characteristics, whereas thermoplastic starch shows hydrophilic characteristics, resulting in a problem of reduced compatibility, which eventually degrades the mechanical properties of the compound resin.

Accordingly, the inventors of the present invention completed the present invention by confirming that when a maleic anhydride-grafted polyolefin elastomer is included as a compatibilizer for a composition including polybutylene adipate terephthalate, polylactic acid, and thermoplastic starch, compatibility is improved and mechanical properties of a resin molded article prepared from the resin composition are improved.

The resin composition of the present invention comprises the polybutylene adipate terephthalate (PBAT) as a biodegradable resin. The polybutylene adipate terephthalate may be included in an amount of 40 to 79 parts by weight based on 100 parts by weight of the total resin composition, and more specifically, 42 parts by weight or more, 45 parts by weight or more, or 50 parts by weight or more, or 79 parts by weight or less, 75 parts by weight or less, 74 parts by weight or less, 73 parts by weight or less, 72 parts by weight or less, 71 parts by weight or less, or 70 parts by weight or less. If the polybutylene adipate terephthalate (PBAT) is included in too small an amount in the resin composition, the elongation of a film prepared therefrom may decrease, and if the polybutylene adipate terephthalate is included in too large an amount in the resin composition, tensile properties such as Young's modulus and yield tensile strength of a film prepared therefrom may deteriorate.

In addition, the resin composition of the present invention comprises polylactic acid. In the present specification, "polylactic acid (PLA)" refers to a lactide polymer and is used interchangeably with "polylactide."

The lactide or lactide monomer may be L-lactide derived from two L-lactic acid molecules; D-lactide derived from two D-lactic acid molecules; meso-lactide derived from an L-lactic acid molecule and a D-lactic acid molecule; or a mixture of two or more thereof. It may also be racemic lactide (rac-Lactide), which is a 50:50 mixture of L-lactide and D-lactide. Accordingly, PLA in the present specification may be a lactide polymer selected from the group consisting of L-lactide, D-lactide, meso-lactide, racemic lactide, and any mixture of two or more thereof.

According to one embodiment of the present invention, polylactic acid may be included in an amount of about 0.1 parts by weight to about 20 parts by weight, or about 1 part by weight to about 10 parts by weight, based on 100 parts by weight of the total of the polybutylene adipate terephthalate, the polylactic acid, and the thermoplastic starch. If the polylactic acid is included in an excessively small amount, the effect of improving mechanical properties of PBAT may not be exhibited, and if the polylactic acid is included in an excessively large amount, rigidity increases, which may result in a decrease in elongation.

In addition, the resin composition may include thermoplastic starch (TPS) to increase processability and accelerate the biodegradation rate of polybutylene adipate terephthalate. The thermoplastic starch may be starch to which thermoplasticity is imparted by adding a plasticizer to starch, which is a natural polymer, so that its shape may be freely changed without carbonization even above a certain temperature, like conventional general-purpose resins such as polyethylene, polystyrene, and polypropylene.

The thermoplastic starch may comprise one or more selected from the group consisting of rice starch, wheat starch, corn starch, sweet potato starch, potato starch, tapioca starch, cassava starch, and modified starches thereof.

In addition, the plasticizer included in starch, which is a natural polymer, may be one or more selected from the group consisting of isosorbide, glycerol, sorbitol, fructose, formamide, xylitol, corn oil, and edible oil. The plasticizer may be included in an amount of 5 wt% to 50 wt%, 10 wt% to 45 wt%, or 15 wt% to 35 wt% based on 100 wt% of the total thermoplastic starch.

The resin composition according to one embodiment of the present invention may include 20 to 50 parts by weight of thermoplastic starch based on 100 parts by weight of the total of the polybutylene adipate terephthalate, the polylactic acid, and the thermoplastic starch. Preferably, the resin composition may include the thermoplastic starch in an amount of 20 parts by weight or more, 22 parts by weight or more, 23 parts by weight or more, or 25 parts by weight or more, and 47 parts by weight or less, 45 parts by weight or less, or 40 parts by weight or less, based on 100 parts by weight of the total resin composition. As the content of thermoplastic starch in the resin composition increases, the price is lowered, making it economical, biodegradability is improved, and bio-based carbon content may be increased. However, if the thermoplastic starch is included in an excessively large amount in the resin composition, the elongation of a film prepared therefrom may decrease, and if the thermoplastic starch is included in an excessively small amount in the biodegradable composition, the biodegradation rate may slow down and tensile properties such as Young's modulus and yield tensile strength of a film prepared therefrom may deteriorate.

Meanwhile, the present invention comprises a compatibilizer to improve the compatibility of the polymer component. The compatibilizer comprises a maleic anhydride-grafted polyolefin elastomer.

The maleic anhydride-grafted polyolefin elastomer is a compound prepared by grafting maleic anhydride onto the main chain of a polyolefin elastomer, and when the maleic anhydride-grafted polyolefin elastomer is used as a compatibilizer, the compatibility of the resin composition may be improved, and based on this, mechanical properties such as impact strength and puncture resistance may be improved.

In addition, the polyolefin elastomer forming the main chain of the maleic anhydride-grafted polyolefin elastomer is not particularly limited, but specifically, it may include at least one selected from the group consisting of polypropylene elastomer, polyethylene elastomer, polyethylenepropylene elastomer, ethylene-propylene-diene monomer elastomer, polyethylene-1-pentene elastomer, polyethylene-1-hexene elastomer, polyethylene-1-heptene elastomer, and polyethylene-1-octene elastomer. More specifically, the maleic anhydride-grafted polyolefin elastomer may be maleic anhydride-grafted polypropylene elastomer (MAH-g-PP), maleic anhydride-grafted polyethylene elastomer (MAH-g-PE), or maleic anhydride-grafted ethylene-propylene-diene monomer elastomer (MAH-g-EPDM).

The grafting rate of the maleic anhydride-grafted polyolefin elastomer may be 0.1 to 2.0 wt%. Preferably, the grafting rate may be 0.1 to 1.5 wt%, 0.3 to 1.0 wt%, 0.4 to 0.8 wt%, or 0.5 wt%. By controlling the grafting rate of maleic anhydride within the above-described range, tensile properties and moldability of a resin molded article prepared from the resin composition may be improved.

According to one embodiment of the present invention, the maleic anhydride-grafted polyolefin elastomer may be included in an amount of 0.01 to 2.0 parts by weight based on 100 parts by weight of the total of the polybutylene adipate terephthalate (PBAT), polylactic acid, and thermoplastic starch. For example, based on 100 parts by weight of the total of polybutylene adipate terephthalate, polylactic acid, and thermoplastic starch, which are resin components of the resin composition, the maleic anhydride-grafted polyolefin elastomer may be included in an amount of 0.03 parts by weight or more, 0.05 parts by weight or more, 0.07 parts by weight or more, 0.1 parts by weight or more, or 0.3 parts by weight or more, and may be included in an amount of 1.5 parts by weight or less, 1.3 parts by weight or less, 1.0 parts by weight or less, 0.8 parts by weight or less, or 0.5 parts by weight or less. As such, by including the maleic anhydride-grafted polyolefin elastomer in the above range together with the maleic acid-modified polyester copolymer, mechanical properties may be simultaneously improved while compatibility is improved.

More specifically, the resin composition according to one embodiment of the present invention may consist of 40 to 79 parts by weight of polybutylene adipate terephthalate, 0.1 to 20 parts by weight of polylactic acid, 20 to 50 parts by weight of thermoplastic starch, 0.01 to 2.0 parts by weight of a maleic anhydride-grafted polyolefin elastomer, and 0.1 to 0.5 parts by weight of a slip agent, based on 100 parts by weight of a total of the polybutylene adipate terephthalate, the polylactic acid, and the thermoplastic starch.

Meanwhile, according to one embodiment of the present invention, the compatibilizer may further comprise polybutylene adipate terephthalate with maleic acid ester-bonded to the terminal hydroxyl group.

The polybutylene adipate terephthalate with maleic acid ester-bonded to the terminal hydroxyl group may be prepared by an esterification reaction of maleic acid with a terminal hydroxyl group of polybutylene adipate terephthalate. That is, it may be an esterified product produced through an esterification reaction between a carboxyl group included in maleic acid and a terminal hydroxyl group of polybutylene adipate terephthalate.

As described above, the polybutylene adipate terephthalate with maleic acid ester-bonded to the terminal hydroxyl group may be prepared by ester-reacting maleic acid and polybutylene adipate terephthalate, and by adjusting the content of maleic acid, the content of polybutylene adipate terephthalate, reaction temperature, reaction time, types and contents of additives, and the like, the polybutylene adipate terephthalate with maleic acid ester-bonded to the terminal hydroxyl group may be prepared, and the weight average molecular weight, structure, viscosity, and the like of the polybutylene adipate terephthalate with maleic acid ester-bonded to the terminal hydroxyl group may be controlled.

According to one embodiment of the present invention, for example, the polybutylene adipate terephthalate with maleic acid ester-bonded to the terminal hydroxyl group may have a viscosity of 500 Pa·s or more and 5,000 Pa·s or less at a temperature of 120 °C to 180 °C, 130 °C to 170 °C, 140 °C to 160 °C, or 150 °C. For example, the viscosity may be 1,000 Pa·s or more, 1,500 Pa·s or more, 1,800 Pa·s or more, 2,000 Pa·s or more, 2,100 Pa·s or more, or 2,200 Pa·s or more, and may be 4,800 Pa·s or less, 4,600 Pa·s or less, or 4,400 Pa·s or less.

If the viscosity of the polybutylene adipate terephthalate with maleic acid ester-bonded to the terminal hydroxyl group is too high, the compatibility enhancement effect is not exhibited, so mechanical properties such as tensile strength of a film prepared from the composition may decrease; and if the viscosity of the polybutylene adipate terephthalate with maleic acid ester-bonded to the terminal hydroxyl group is too low, the thermal diffusivity of the resin composition is lowered, so moldability and/or processability may become inferior and process operation costs may increase.

In addition, the polybutylene adipate terephthalate with maleic acid ester-bonded to the terminal hydroxyl group may include 1.0 wt% or more and 10.0 wt% or less of maleic acid.

Specifically, based on 100 wt% of polybutylene adipate terephthalate included in the polybutylene adipate terephthalate with maleic acid ester-bonded to the terminal hydroxyl group, maleic acid may be included in an amount of 1.5 wt% or more, 2.0 wt% or more, 2.5 wt% or more, 2.7 wt% or more, 3.0 wt% or more, or 3.5 wt% or more, and may be included in an amount of 8.0 wt% or less, 7.0 wt% or less, 6.0 wt% or less, 5.5 wt% or less, or 5.0 wt% or less.

If maleic acid is included in too small an amount in the polybutylene adipate terephthalate with maleic acid ester-bonded to the terminal hydroxyl group, the compatibility of the resin composition may be reduced. The compatibility of the resin composition may be evaluated by measuring a specific surface area, where the specific surface area is a factor for the degree to which the composition recovers when strain is increased and then decreased, and the smaller the non-recovery area is, the better the distribution of a dispersed phase with respect to a continuous phase included in the composition, and thus the compatibility may be excellent.

In addition, when maleic acid is contained in an excessive amount in the polybutylene adipate terephthalate with maleic acid ester-bonded to the terminal hydroxyl group, the thermal diffusivity of the resin composition may be lowered, so that the moldability and/or processability may become inferior and process operation costs may increase. Specifically, in a process of manufacturing a film by reactive extrusion of a resin composition, a compound discharged from an extruder is cooled by passing through a cooling water bath and then cut (pelletized); however, when an excessive amount of maleic acid is contained, the thermal diffusivity of the resin composition is low, such that a cooling rate of the compound discharged from the extruder becomes slow, and thus there may be a problem in that cutting is difficult. Accordingly, the moldability and/or processability may become inferior, or there may be a problem in that process operation costs increase as additional cooling equipment is required.

According to one embodiment, the molecular weight of the polybutylene adipate terephthalate with maleic acid ester-bonded to the terminal hydroxyl group may be 100,000 g/mol to 150,000 g/mol. The weight average molecular weight may be 110,000 g/mol or more, 120,000 g/mol or more, or 130,000 g/mol or more, and may be 147,000 g/mol or less, 145,000 g/mol or less, 142,000 g/mol or less, or 140,000 g/mol or less. If the molecular weight of the polybutylene adipate terephthalate with maleic acid ester-bonded to the terminal hydroxyl group does not satisfy the above-described range, a compatibility improvement effect is not exhibited, and thus mechanical properties such as tensile strength of a film prepared from the composition may be deteriorated.

Meanwhile, the maleic acid-modified polyester copolymer may comprise at least one selected from the group consisting of a repeating unit represented by the following Formula 1 and a structure represented by the following Formula 2:

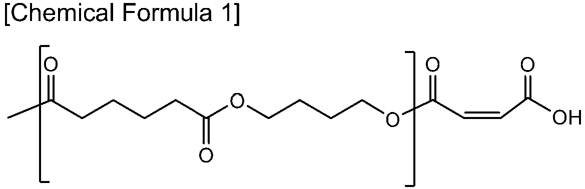

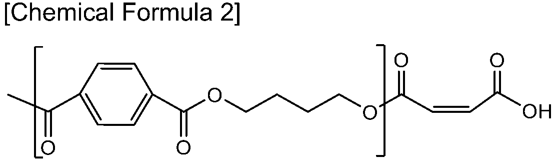

The repeating unit represented by Formula 1 is a structure in which maleic acid forms an ester bond at a terminal of a butylene-adipate repeating unit of polybutylene adipate terephthalate, and the repeating unit represented by Formula 2 is a structure in which maleic acid forms an ester bond at a terminal of a butylene-terephthalate repeating unit.

In addition to the repeating unit represented by Chemical Formula 1 and the repeating unit represented by Chemical Formula 2, it may have a structure in which two carboxyl groups of maleic acid each form an ester bond.

In addition, the number of the repeating units represented by Formula 1 and the repeating units represented by Formula 2 may be appropriately controlled according to the desired physical properties of the maleic acid-modified polyester copolymer.

According to one embodiment of the present invention, the maleic acid-modified polyester copolymer may be included in an amount of 0.1 to 10 wt% based on the total weight of the polybutylene adipate terephthalate (PBAT), polylactic acid, thermoplastic starch, and maleic acid-modified polyester copolymer. For example, based on the total weight of the polybutylene adipate terephthalate, polylactic acid, thermoplastic starch, and maleic acid-modified polyester copolymer, which are resin components of the resin composition, the maleic acid-modified polyester copolymer may be included in an amount of 0.1 wt% or more, 0.3 wt% or more, 0.5 wt% or more, 0.7 wt% or more, 1 wt% or more, 1.2 wt% or more, 1.5 wt% or more, or 2.0 wt% or more, and 10.0 wt% or less, 7.0 wt% or less, 5.0 wt% or less, 4.5 wt% or less, 4.0 wt% or less, or 3.5 wt% or less. When the maleic acid-modified polyester copolymer is included in an excessively small amount, an effect of improving compatibility is not exhibited, and thus mechanical properties such as tensile strength of a film prepared from the composition may be deteriorated; and when the maleic acid-modified polyester copolymer is included in an excessively large amount, melt viscosity becomes excessively high, and thus moldability may be deteriorated.

In addition, the resin composition according to one embodiment of the invention may further include other additives. As for the additives, general additives used during molding of resin compositions in the technical field to which the present invention pertains, that is, in the field of thermoplastic polymers, may be used without any particular limitation.

The additive may include a heat stabilizer, a UV stabilizer, a slip agent, a lubricant, or the like. In addition, the additive may be included in an amount of 0.1 to 5 parts by weight based on 100 parts by weight of a total of the polybutylene adipate terephthalate, the polylactic acid, the thermoplastic starch, and the compatibilizer.

According to one embodiment of the present invention, the resin composition of the present invention may consist of 40 to 79 parts by weight of polybutylene adipate terephthalate, 0.1 to 20 parts by weight of polylactic acid, 20 to 50 parts by weight of thermoplastic starch, 0.01 to 1 part by weight of a maleic anhydride-grafted polyolefin elastomer, and 0.1 to 0.5 parts by weight of a slip agent, based on a total of 100 parts by weight of the polybutylene adipate terephthalate, the polylactic acid, and the thermoplastic starch.

In addition, the present invention provides a resin molded article comprising the above-described resin composition. Further, the resin molded article may be a biodegradable mulching film or a food packaging film, and more specifically, it may be used for applications such as an agricultural mulching film or packaging materials.

According to one embodiment of the present invention, the resin molded article may have a tensile strength value of about 200 kgf/cm² to about 500 kgf/cm², or about 220 kgf/cm² to about 400 kgf/cm², or about 230 kgf/cm² to about 350 kgf/cm², measured according to the ISO 527 standard. More specifically, the tensile strength in the MD direction may be 200 kgf/cm² to 300 kgf/cm², 210 kgf/cm² to 280 kgf/cm², or 230 kgf/cm² to 270 kgf/cm² , and the tensile strength in the TD direction may be 250 kgf/cm² to 350 kgf/cm², or 260 kgf/cm² to 330 kgf/cm² .

In addition, the resin molded article may have an elongation value of about 350% to about 1000%, about 350% to about 800%, or about 350% to 700%, as measured according to the ISO 527 standard, and may exhibit very excellent elongation values. More specifically, the MD (machine direction) elongation may be 350% to 600% or 380% to 550%, and the TD (transverse direction) elongation may be 550% to 700% or 600% to 700%.

According to one embodiment of the present invention, a Dart impact strength measured according to the ASTM D1709 standard may be 400 g or more and 2.5 J or more. More specifically, on a mass basis, the dart impact strength may be 405 g or more, 410 g or more, 415 g or more, 420 g or more, 425 g or more, or 430 g or more, and 500 g or less. In addition, on an energy basis, it may be 2.6 J or more, 2.7 J or more, or 2.8 J or more, and 10.0 J or less.

According to an embodiment of the present invention, puncture resistance values measured according to the ASTM D5748 standard may be 15.0 N or more, 70.0% or more, and 0.70 J or more. More specifically, on a force basis, the puncture resistance value may be 15.1 N or more, 15.2 N or more, 15.3 N or more, 15.4 N or more, or 15.5 N or more; on a distance basis, it may be 71.0% or more, 72.0% or more, 73.0% or more, or 74.0% or more; and on an energy basis, it may be 0.71 J or more, 0.72 J or more, 0.73 J or more, or 0.74 J or more.

As described above, the resin molded article according to one example of the present invention is suitable for use in applications such as a biodegradable mulching film or a food packaging film due to its mechanical properties.

### [Effects of the Invention]

As described above, the resin composition of the present invention may exhibit excellent mechanical properties while maintaining the biodegradability of polybutylene adipate terephthalate.

### [Mode for Invention]

Hereinafter, preferred embodiments are presented to facilitate understanding of the invention. However, the following embodiments are provided only to illustrate the present invention, and the present invention is not limited thereto.

### <Examples>

### Preparation Example: Preparation of polybutylene adipate terephthalate with maleic acid ester-bonded to the terminal hydroxyl group (PBAT-MA (5.0))

100 g of polybutylene adipate terephthalate (PBAT, Solpol 1000N, SOLTECH Co., Ltd.) and 5 g of maleic anhydride were charged into an internal mixer and reacted while mixing for 10 minutes under conditions of 160 °C and 50 rpm to prepare polybutylene adipate terephthalate with maleic acid ester-bonded to the terminal hydroxyl group (weight average molecular weight: 135,000; viscosity measured at 150 °C and 0.1 rad/s: 2269.52 Pa·s).

Hereinafter, the compounds used in the Examples and Comparative Examples are as follows.
Polybutylene adipate terephthalate: LG CHEM SF1000 (density: 1.20-1.25, MFI (ASTM D1238, 190 °C, 2.16 kg): 2.5-4.5 g/10 min)
Polylactic acid: LX-175^{™} from Total Corbion (density: 1.24 g/cm3, MFI (ISO 1133-11, 190 °C, 2.16 kg): 3.00 g/10 min)
Thermoplastic starch: HSM^{™} from EcoCyco (density: 1.5 g/cm³)
Compatibilizer A: maleic anhydride-grafted polyolefin elastomer (POE-g-MA, FUSABOND N493^{™} manufactured by DOW, density: 0.87 g/cm3, melting point: 50 °C, freezing point: 28 °C, melt index (190 °C, 2.16 kg): 1.6 g/10 min, grafting rate: 0.5 wt%)
Compatibilizer B: PBAT-MA of the Preparation Example
Slip agent: Pentaerythritol tetrastearate (Loxiol P861/3.5, SpecialChem)

### Examples and Comparative Examples

Resin compositions were prepared by mixing the components according to the compositions shown in Table 1 and Table 2 below.

Specifically, the polybutylene adipate terephthalate (PBAT), polylactic acid (PLA), thermoplastic starch (TPS), compatibilizer A, compatibilizer B, and slip agent were introduced into a twin-screw extruder (die diameter = 32 mm) in the compositions shown in Table 1 and Table 2 below. Thereafter, extrusion was performed under conditions of a barrel temperature of 190°C, a feed rate of 50 kg/hr, and a screw speed of 300 rpm to prepare a resin composition in pellet form.

**[Table 1]**

| | PBAT (parts by weight) | PLA (parts by weight) | TPS (parts by weight) | Compatibilizer A (parts by weight) | Compatibilizer B (wt%^{a}) | Slip agent (parts by weight) |
|---|---|---|---|---|---|---|
| Comparative Example 1 | 81 | 9 | 10 | - | - | 0.2 |
| Comparative Example 2 | 72 | 8 | 20 | - | - | 0.2 |
| Comparative Example 3 | 63 | 7 | 30 | - | - | 0.2 |
| Comparative Example 4 | 54 | 6 | 40 | - | - | 0.2 |
| Example 1-1 | 63 | 7 | 30 | 0.1 | - | 0.2 |
| Example 1-2 | 63 | 7 | 30 | 0.5 | - | 0.2 |
| Example 1-3 | 63 | 7 | 30 | 1.0 | - | 0.2 |
| Example 1-4 | 70.5 | 4.5 | 25 | 0.5 | - | 0.2 |
| Example 1-5 | 69 | 6 | 25 | 0.5 | - | 0.2 |
| Example 1-6 | 67.5 | 7.5 | 25 | 0.5 | - | 0.2 |

**[Table 2]**

| | PBAT (parts by weight) | PLA (parts by weight) | TPS (parts by weight) | Compatibilizer A (parts by weight) | Compatibilizer B (wt%a) | Slip agent (parts by weight) |
|---|---|---|---|---|---|---|
| Comparative Example 5 | 56 | 4 | 40 | - | - | 0.2 |
| Example 2-1 | 56 | 4 | 40 | 0.1 | - | 0.2 |
| Example 2-2 | 53 | 4 | 40 | 0.1 | 3.0 | 0.2 |
| Example 2-3 | 53 | 4 | 40 | 0.5 | 3.0 | 0.2 |

| | | | | | | |
|---|---|---|---|---|---|---|
| a) The weight percentage is based on the total weight of PBAT, PLA, TPS, and compatibilizer B. | | | | | | |

### Film manufacturing

For the pellet-shaped resin compositions prepared in the Examples and Comparative Examples, blown films were prepared by molding to a thickness of 0.025 mm at an extrusion temperature of 160 °C using a single screw extruder (Blown Film M/C, 19 pi, L/D=25).

### Measurement of Physical Properties

### - Tensile strength and elongation

For the films prepared above, tensile strength and elongation values in the MD and TD directions of the films were measured according to the ISO 527 standard using a universal testing machine. In this case, the specimens were prepared in a bar form (width x length = 10 mm x 150 mm).

### - Dart impact

For the films prepared above, film impact strength values were measured according to the ASTM D1709 standard using the falling dart method.

### - Puncture resistance

For the films prepared above, puncture resistance values were measured according to the ASTM D5748 standard using a universal testing machine.

### - Practical test

For the films prepared above, they were fixed to a circular clamp with a diameter of 127 mm, and weights of 60 / 90 g were placed to measure the maximum weight that the film could resist.

The measurement results are shown in Tables 3 to 5 below.

**[Table 3]**

| | MD direction | | TD direction | |
|---|---|---|---|---|
| | tensile strength (kgf/cm²) | elongation (%) | tensile strength (kgf/cm²) | elongation (%) |
| Comparative Example 1 | 218 | 392 | 252 | 628 |
| Comparative Example 2 | 236 | 378 | 256 | 630 |
| Comparative Example 3 | 231 | 380 | 219 | 557 |
| Comparative Example 4 | 218 | 358 | 190 | 481 |
| Example 1-1 | 239 | 408 | 258 | 617 |
| Example 1-2 | 246 | 411 | 269 | 632 |
| Example 1-3 | 241 | 427 | 271 | 637 |
| Example 1-4 | 260 | 511 | 316 | 663 |
| Example 1-5 | 243 | 405 | 287 | 650 |
| Example 1-6 | 240 | 386 | 279 | 633 |

**[Table 4]**

| | Dart impact | | Puncture resistance | | |
|---|---|---|---|---|---|
| | Mass (g) | Energy (J) | Force (N) | Distance (%) | Energy (J) |
| Comparative Example 1 | 312 | 2.0 | 13.6 | 65.9 | 0.55 |
| Comparative Example 2 | 335 | 2.2 | 13.2 | 66.8 | 0.57 |
| Comparative Example 3 | 392 | 2.5 | 14.4 | 72.5 | 0.69 |
| Comparative Example 4 | 402 | 2.6 | 14.6 | 72.9 | 0.71 |
| Example 1-1 | 437 | 2.8 | 15.7 | 73.7 | 0.74 |
| Example 1-2 | 479 | 3.1 | 17.6 | 78.2 | 0.90 |
| Example 1-3 | 458 | 3.0 | 17.0 | 77.7 | 0.86 |
| Example 1-4 | 418 | 2.7 | 15.9 | 74.7 | 0.79 |
| Example 1-5 | 432 | 2.8 | 17.0 | 76.6 | 0.84 |
| Example 1-6 | 439 | 2.8 | 18.7 | 71.2 | 0.85 |

**[Table 5]**

| | Dart impact | | Puncture resistance | | | Practical test |
|---|---|---|---|---|---|---|
| | Mass (g) | Energy (J) | Force (N) | Distance (%) | Energy (J) | Weight (kg) |
| Comparative Example 5 | 426 | 2.8 | 14.3 | 92.4 | 0.85 | 10.96 |
| Example 2-1 | 457 | 3.0 | 15.2 | 94.4 | 0.90 | 11.20 |
| Example 2-2 | 478 | 3.1 | 16.9 | 102.3 | 1.13 | 12.82 |
| Example 2-3 | 491 | 3.2 | 17.7 | 103.4 | 1.16 | 13.84 |

As can be seen in Table 3 above, it was confirmed that the resin composition comprising the maleic anhydride-grafted polyolefin elastomer according to the present invention exhibited improved tensile strength and elongation compared to the resin compositions of the Comparative Examples not comprising a compatibilizer.

In addition, as can be seen in Table 4, it was confirmed that the impact strength of the resin composition according to the present invention increased. Furthermore, as can be seen in Table 5, it was confirmed that the resin composition further comprising polybutylene adipate terephthalate with maleic acid ester-bonded to the terminal hydroxyl group exhibited improved impact strength, and at the same time, the puncture resistance and practical test results were also excellent.

## Claims

1. A resin composition comprising polybutylene adipate terephthalate (PBAT); polylactic acid (PLA); thermoplastic starch (TPS); and a compatibilizer, wherein the compatibilizer comprises a maleic anhydride-grafted polyolefin elastomer.

2. The resin composition according to claim 1, comprising the polylactic acid in an amount of 0.1 to 20 parts by weight based on 100 parts by weight of the total of the polybutylene adipate terephthalate, the polylactic acid, and the thermoplastic starch.

3. The resin composition according to claim 1, comprising the thermoplastic starch in an amount of 20 to 50 parts by weight based on 100 parts by weight of the total of the polybutylene adipate terephthalate, the polylactic acid, and the thermoplastic starch.

4. The resin composition according to claim 1, wherein the polyolefin elastomer comprises at least one selected from the group consisting of polypropylene elastomer, polyethylene elastomer, polyethylenepropylene elastomer, ethylene-propylene-diene monomer elastomer, polyethylene-1-pentene elastomer, polyethylene-1-hexene elastomer, polyethylene-1-heptene elastomer, and polyethylene-1-octene elastomer.

5. The resin composition according to claim 1, wherein a grafting rate of the maleic anhydride-grafted polyolefin elastomer is 0.1 to 2.0 wt%.

6. The resin composition according to claim 1, comprising 0.01 to 1 part by weight of a maleic anhydride-grafted polyolefin elastomer based on 100 parts by weight of the total of the polybutylene adipate terephthalate, the polylactic acid, and the thermoplastic starch.

7. The resin composition according to claim 1, consisting of 40 to 79 parts by weight of polybutylene adipate terephthalate, 0.1 to 20 parts by weight of polylactic acid, 20 to 50 parts by weight of thermoplastic starch, 0.01 to 1 part by weight of a maleic anhydride-grafted polyolefin elastomer, and 0.1 to 0.5 parts by weight of a slip agent, based on 100 parts by weight of the total of the polybutylene adipate terephthalate, the polylactic acid, and the thermoplastic starch.

8. The resin composition according to claim 1, wherein the compatibilizer further comprises polybutylene adipate terephthalate with maleic acid ester-bonded to the terminal hydroxyl group.

9. The resin composition according to claim 8, wherein the viscosity of the polybutylene adipate terephthalate with maleic acid ester-bonded to the terminal hydroxyl group is from 500 Pa·s to 5,000 Pa·s.

10. The resin composition according to claim 8, wherein the polybutylene adipate terephthalate with maleic acid ester-bonded to the terminal hydroxyl group comprises 1.0 wt% to 10.0 wt% of maleic acid.

11. The resin composition according to claim 8, wherein the weight-average molecular weight of the polybutylene adipate terephthalate with maleic acid ester-bonded to the terminal hydroxyl group is from 100,000 g/mol to 150,000 g/mol.

12. The resin composition according to claim 8, comprising 0.1 to 10 wt% of the polybutylene adipate terephthalate with maleic acid ester-bonded to the terminal hydroxyl group, based on the total weight of the polybutylene adipate terephthalate, the polylactic acid, the thermoplastic starch, and the polybutylene adipate terephthalate with maleic acid ester-bonded to the terminal hydroxyl group.

13. A resin molded article comprising the resin composition according to any one of claims 1 to 12.

14. The resin molded article according to claim 13, wherein a tensile strength value measured according to the ISO 527 standard is from 200 kgf/cm² to 500 kgf/cm².

15. The resin molded article according to claim 13, wherein an elongation value measured according to the ISO 527 standard is from 350% to 1000%.

16. The resin molded article according to claim 13, wherein a Dart impact measured according to the ASTM D1709 standard is 400 g or more and 2.5 J or more.

17. The resin molded article according to claim 13, wherein the puncture resistance values measured according to the ASTM D5748 standard are 15.0 N or more, 70.0% or more, and 0.70 J or more.

18. The resin molded article according to claim 13, which is a biodegradable mulching film or a food packaging film.
